# EUROPÄISCHE PATENTSCHRIFT

(11) **EP 0 968 417 B1**
(45) Veröffentlichungstag und Bekanntmachung des Hinweises auf die Patenterteilung: **22.12.2004**
(21) Anmeldenummer: 98917035.2
(22) Anmeldetag: 20.03.1998
(51) Int. Cl.: G01N 27/447

(54) **VERFAHREN ZUR TRÄGERFREIEN ABLENKUNGSELEKTROPHORESE**
METHOD FOR CARRIER-FREE DEFLECTION ELECTROPHORESIS
PROCEDE POUR ELECTROPHORESE PAR DERIVATION SANS ENTRAINEUR

(30) Priorität: 21.03.1997 DE 19711898
(43) Veröffentlichungstag der Anmeldung: 05.01.2000
(73) Patentinhaber: Weber, Gerhard, 85551 Kirchheim (DE)
(72) Erfinder: Weber, Gerhard, 85551 Kirchheim (DE)
(74) Vertreter: Kilian, Helmut, Dr.
(86) Internationale Anmeldenummer: PCT/EP1998/001648
(87) Internationale Veröffentlichungsnummer: WO 1998/043077

(56) Entgegenhaltungen:
- DE-C- 4 139 472
- US-A- 3 847 773

## Beschreibung

Die Erfindung betrifft ein Verfahren zur crägerfreien Ablenkungselektrophorese.

Die trägerfreie Ablenkungselektrophorese wurde bisher ausschließlich in einem kontinuierlichen Prozeßablauf eingesetzt. Tatsächlich arbeitet dieses Verfahren im kontinuierlichem Betrieb mit hervorragenden Ergebnissen, wenn der negative Einfluß des laminaren Flußprofils auf die Bandbreite der zu trennenden Substanzen minimiert werden kann oder gar nicht wirksam wird. Dies gilt insbesondere für den Prozeß der kontinuierlichen isoelektrischen Fokussierung.

In allen Elektromigrationsverfahren der Ablenkungselektrophorese bewirkt die Bandenverbreiterung durch das laminare Flußprofil des oder der Trennmedien eine gravierende Verschlechterung der Trennleistung.

Die Grundlagen der trägerfreien Ablenkungselektrophorese in kontinuierlichem Prozeßablauf wurden bereits vor mehr als 30 Jahren in der Literatur beschrieben, u.a. auch im Jahrbuch 1968 der Max-Planck-Gesellschaft S. 117-137. Dieser Prozeß wird auch in der Literatur unter dem Begriff FFE (Free Flow Elektrophorese) oder CFE (continuous flow electrophoresis) beschrieben. (K. Hannig: Die trägerfreie kontinuierliche Elektrophorese und ihre Anwendung. Anal. Chem. 181, 244 (1961); Roman, M.C. and Brown, P.R.: Anal. Chem. Free Flow Electrophoresis. 66(N2), 86-94, (1994); Braun, R., Wagner, H. und Weber G.: Präparative Free Flow Elektrophorese - ein leistungsfähiges Verfahren zur Trennung von Naturstoffen, GIT Fachzeitschrift für das Laboratorium 39 (1995), 317-322).

FFE-Trennverfahren dienen zur Trennung von Ionen beliebigen Molekulargewichts bis hin zu Biopartikeln. Dabei ist es unerheblich, ob die zu trennende Probe selbst geladen ist oder die Ladung durch Anlagerung oder Sorption von Ionen entstand.

Dieses Verfahren wird sowohl für präparative wie auch analytische Trennungen eingesetzt.

Das Verfahren der kontinuierlichen Ablenkungselektrophorese wurde vom Anmelder in wesentlichen Aspekten verbessert (DE 41 39 472 C1).

Die Größenordnung dieser Verbesserungen war bei den verschiedenen FFE-Trenntechniken unterschiedlich:

In allen FFE-Trenntechniken wurde eine deutliche Verbesserung der Langzeitstabilität der Trennung erreicht.

Die Trennleistung wurde im Falle der kontinuierlichen isoelektrischen Fokussierung um den Faktor 10 - 50 verbessert, im Falle der Elektromigrationsverfahren wurde nur eine Verbesserung um den Faktor 2 - 4 erreicht und diese Verbesserung wurde ausschließlich durch die neuartige "totvolumenfreie" Fraktionierung mittels des im Patent beschriebenen Counterflow erreicht. Der negative Einfluß des laminaren Flußprofils auf die Trennleistung der Elektromigrationsverfahren wurde durch die o.g. Verbesserungen nicht beeinflußt.

Im folgenden wird ein Verfahren der kontinuierliche Ablenkungselektrophorese an Hand des "typischen" Elektromigrationsverfahrens, der Zonenelektrophorese, beschrieben.

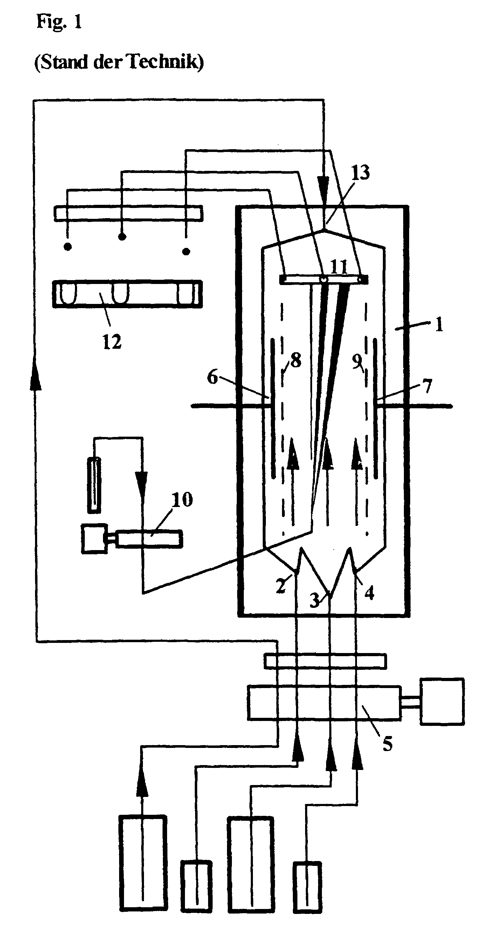

In Fig. 1 ist eine Trennkammer 1 schematisiert dargestellt. Am unteren Ende der Trennkammer 1 befinden sich mindestens drei Einlaßöffnungen 2, 3, 4, welche über drei Leitungen mit den Förderkanälen einer Multikanalpumpe 5 verbunden sind. Über die zentrale Einlaßöffnung 3 wird das Trennmedium, und über die beiden äußeren Einlässe'2, 4 werden die Stabilisierungsmedien in den Trennraum eingeführt.

Diese Medien strömen unter laminaren Flußbedingungen durch den Trennraum. Parallel zu den Seitenkanten der Trennkammer sind Elektroden 6, 7 angeordnet, die durch eine weitere Pumpe mit hoher Flußgeschwindigkeit im Kreislauf gespült werden. Membranen 8, 9, die den elektrischen Strom leiten, trennen die Elektrodenräume vom Trennraum und verhindern jeglichen Medienaustausch durch hydrodynamischen Fluß.

Wird nun ein Probengemisch mittels einer unabhängigen Dosierpumpe 10 und mit der optimalen Dosierrate in das strömende Trennmedium aufgegeben, so wird diese Probe als feiner Strahl mit dem Trennmedium transportiert.

Wird an die Elektroden eine Hochspannung angelegt, so werden alle geladenen Bestandteile der Medien und der Probe aus der ursprünglichen Richtung ausgelenkt, und diese Auslenkung ist umso größer, je mehr Ladungen diese ionischen Bestandteile besitzen.

Bestandteile unterschiedlicher Ladung wandern demnach auf getrennten Bahnen (siehe Fig. 1) durch den Trennraum und erreichen an unterschiedliche Orten eine quer zur Strömungsrichtung angeordnete Reihe von Schlauchöffnungen 11 und werden dann mit den Medien zu separaten Auffanggefäßen 12 geführt. Diese Reihe von Schlauchöffnungen mit einem geringstmöglichen Abstand zwischen den Öffnungen wird als Fraktioniervorrichtung bezeichnet, und die Anzahl dieser parallel angeordneten Schläuche liegt im Bereich von 30 bis max 180.

Vom oberen Ende der Trennkammer strömt ein zusätzliches Medium (Counterflow Medium) in entgegengesetzter Richtung über einen Einlaß 13 zu den Trennmedien und verläßt den Trennraum ebenfalls über die Schlauchöffnungen der Fraktionier-vorrichtung.

Ein gemäß der obigen Beschreibung konzipiertes Gerät erbringt Trennungen, die in allen Trenntechniken der kontinuierlichen Ablenkungselektrophorese eine hervorragende Langzeitstabilität der Trennprofile zeigen, aber die Qualität der Trennung (Auflösung) ist nur im Falle der kontinuierlichen isoelektrischen Fokussierung mit den Leistungen der analogen analytischen Trenntechnik vergleichbar.

In allen kontinuierlichen Elektromigrationsverfahren ist die Trennleistung verglichen mit den analogen analytischen Trenntechniken dagegen bescheiden.

In zahlreichen Veröffentlichungen (J.A. Giannovario, R. Griffin, E.L. Gray: A mathematical model of free-flow electrophoresis. Journal of Chromatography, 153, 329-352 (1978); F.G. Boese: Contribution to a mathematical theory of free flow electrophoresis, J. Chromat. 483, 145-170 (1988); K. Hannig and H.G. Heidrich: Free-flow Electrophoresis 1990 by GIT Verlag Darmstadt ISBN 3-921956-88-9) wurden die physikalischen bzw. elektrochemischen Effekte beschrieben, die zur sogenannten Bandenverbreiterung der Analyten während der Trennung in der kontinuierlichen Ablenkungselektrophorese beitragen.

Die wichtigsten dieser Effekte sind:
Verbreiterung durch das laminare Flußprofil
Verbreiterung durch Thermokonvektion
Verbreiterung durch Elektroosmose
Verbreiterung durch elektrokinetische Effekte

Der negative Einfluß aller bis dato beschriebenen elektrokinetischen Effekte kann minimiert bzw. ausgeschlossen werden, wenn Trennmedien mit den geeigneten ionischen Bestandteilen in genügend hoher Ionenstärke verwendet werden und gleichzeitig die Konzentration der Probe nicht überhöht wird.

Es existieren zahlreiche Möglichkeiten, den negativen Einfluß der Elektroosmose zu minimieren, z. B. durch die Wahl eines geeigneten Wandmaterials (Kunststoffe anstatt Glas oder Quarz) oder am besten durch die Zugabe von oberflächenaktiven Chemikalien zu den Trennmedien, die die Elektroosmose unterbinden. Dieses Verfahren wird in der Literatur als "dynamisches Coating" bezeichnet

Der negative Einfluß der Thermokonvektion kann sehr einfach reduziert werden, indem eine horizontale Ausrichtung der Trennkammer anstatt einer vertikalen Ausrichtung gewählt wird.

Der negative Einfluß des laminaren Flußprofils ist im Falle der kontinuierlichen isoelektrischen Fokussierung nicht gegeben, solange eine genügend lange Trennzeit gewählt wird, die auch die Fokussierung der Analyten erlaubt, die im Zentrum des Trennkammerspaltes mit der höchsten linearen Geschwindigkeit transportiert werden.

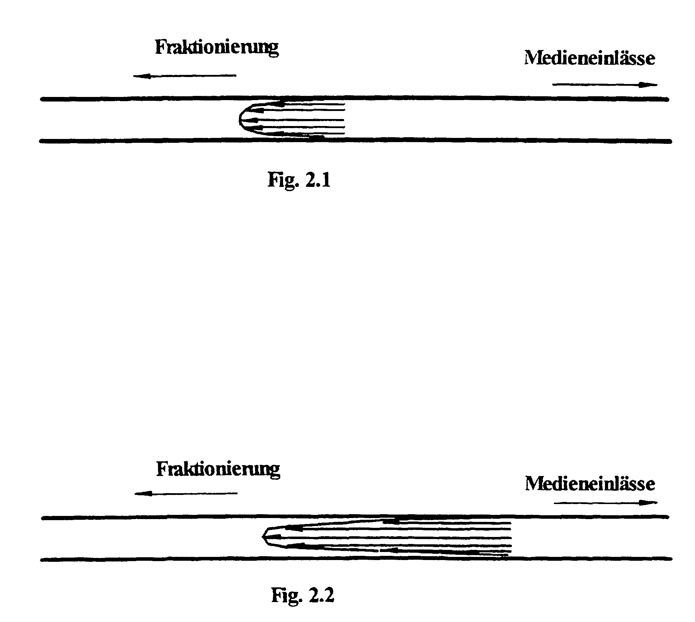

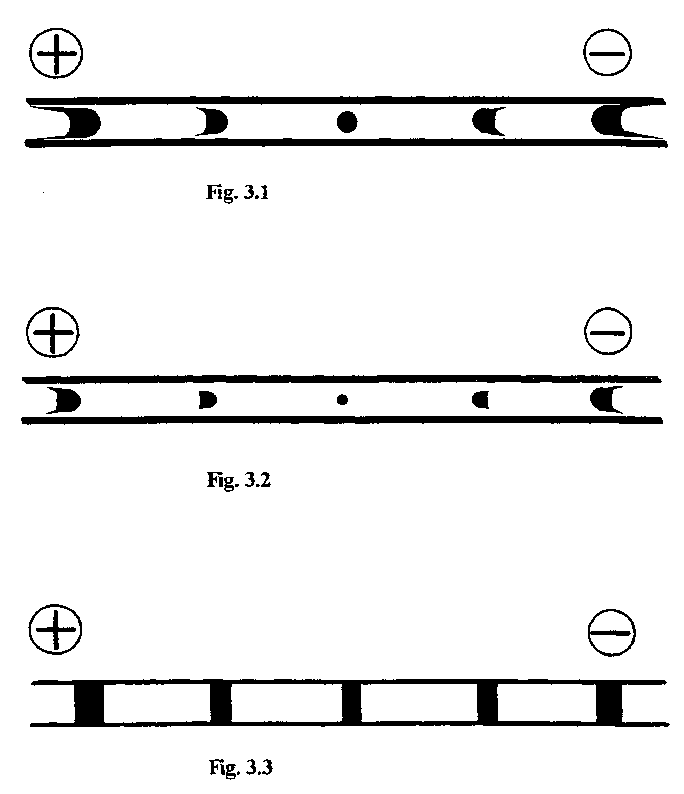

Im Falle der Elektromigrationsverfahren ist der negative Einfluß dagegen sehr bedeutend. Analyten, die in der Nähe oder in der Grenzfläche zu den Wänden der Trennkammer wandern, durchlaufen die Trennkammer in einer wesentlich längeren Zeit als Analyten im Zentrum des Trennkammerspaltes (siehe Fig. 2.1 und 2.2) und werden demnach deutlich weiter abgelenkt. Dieser Effekt führt zu einer Bandenverbreiterung, die als Tailing in Richtung der Elektromigration erkennbar wird. In der Fig. 3.1 wird dieser Effekt der Bandenverbreiterung beispielhaft für je 2 niedermolekulare Analyte mit entegegengesetzter Ladung und in Fig. 3.2 beispielhaft für hochmolekulare Partikel dargestellt.

Bei einer kontinuierlichen Prozeßführung eines Elektromigrationsverfahrens unter den Randbedingungen der trägerfreien Elektrophorese ist demnach der negative Einfluß des laminaren Flußprofils für niedermolekulare Analyten nicht zu verhindern. Der absolute Wert der Bandenverbreiterung steigt mit zunehmender Wanderstrecke der Analyten. Auch die Reduzierung der Diffusion durch Verwendung von Trennmedien erhöhter Viskosität ist nicht hilfreich, da dadurch das laminare Flußprofil noch ungünstiger wird (Fig. 2.2 )

Im Falle der Trennung von Biopartikeln kann eine mengenmäßig reduzierte Probenaufgabe in das Zentrum des Trennkammerspaltes eine Verbesserung der Auflösung erbringen, da wegen der extrem geringen Diffusion die Partikel während einer Verweilzeit von <10 Minuten nicht in den Bereich der Trennkammerwände gelangen können (siehe dazu auch Fig. 3.2). Diese Minimierung des Einflusses des laminaren Flußprofiles kann aber nur durch eine deutliche Reduzierung des Probendurchsatzes erreicht werden (Faktor 0,3 - 0,05).

Der Erfindung liegt nun die Aufgabe zugrunde, ein Verfahren zur trägerfreien Ablenkelektrophorese anzugeben, bei welchem der Einfluß eines laminaren Flußprofils ausgeschaltet ist.

Diese Aufgabe wird erfindungsgemäß durch ein Verfahren mit den Merkmalen des Patentanspruchs 1 gelöst. Vorteilhafte Weiterbildungen der Erfindung sind Gegenstand der abhängigen Ansprüche.

Mit der erfindungsgemäßen Verfahrensführung im Intervallbetrieb - Eintragen der Probe in den Trennraum bei abgeschaltetem elektrischem Feld , nachfolgendes Durchführen der elektrophoretischen Trennung höchstens so lange, wie sich die Probe in allen ihren Teilen noch im elektrischen Feld befindet - wird der Nachteil des kontinuierlichen Verfahrens überwunden, daß ein laminares Strömungsprofil mit geringeren Strömungsgeschwindigkeiten im Bereich der Trennkammerwände zu unterschiedlichen Verweildauern verschiedener Teile der Probe im elektrischen Feld und damit zu einer verschlechterten Auflösung führt.

Im Sinne ausreichend großer Probenmengen bei gleichzeitiger Begrenzung der Länge der Elektroden in Strömungsrichtung wird bevorzugt, die elektrophoretische Trennung bei ruhender Probe und ruhendem Trägermedium oder jedenfalls mit gegenüber der Strömungsgeschwindigkeit beim Eintrag der Probe stark verminderter Strömungsgeschwindigkeit, die einem langsamen Driften der Probe im Trennraum zum Auslaß hin gleichkommt, durchzuführen.

Anstatt, wie nach dem bekannten Verfahren, die Probe kontinuierlich zusammen mit dem Trenn- bzw. Trägermedium einzutragen und die elektrophoretische Trennung kontinuierlich bei kontinuierlich eingeschaltetem elektrischem Feld durchzuführen, wird erfindungsgemäß jedenfalls die Probe diskontinuierlich und bei abgeschaltetem elektrischem Feld eingetragen und bevorzugt die elektrophoretische Trennung bei mit dem Trennmedium ruhender Probe oder mit dem Trennmedium langsam driftender Probe und in jedem Fall nur so lange durchgeführt, wie sich alle Teile der Probe noch im Trennraum befinden. Der Einfluß unterschiedlicher Strömungsgeschwindigkeiten unterschiedlicher Teile der Probe auf das Ergebnis der Elektrophorese ist damit vermieden und die Auflösung entsprechend verbessert.

Eine Ausführungsform der Erfindung wird im folgenden anhand der beigefügten Zeichnungen beschrieben. Auf diesen zeigt bzw. zeigen:
Fig. 1 eine bekannte Apparatur zur Durchführung einer Ablenkelektrophorese,
Fig. 2.1 ein laminares Flußprofil bei Medien mit relativ niedriger Viskosität, wobei ein Trennkammerspalt in einem die Flußrichtung enthaltenden Schnitt gezeigt ist,
Fig. 2.2 ein laminares Flußprofil bei Medien mit erhöhter Viskosität, wobei ein Trennkammerspalt in einem die Flußrichtung enthaltenden Schnitt gezeigt ist,
Fig. 3.1 die Bandenverbreiterung am Beispiel der Trennung eines anionischen und kationischen Analyten mit hoher Diffusionsgeschwindigkeit, wobei der Trennkammerspalt in einem Schnitt senkrecht zur Strömungsrichtung gezeigt ist,
Fig. 3.2 die Bandenverbreiterung am Beispiel der Trennung eines anionischen und kationischen Analyten mit geringer Diffusionsgeschwindigkeit, wobei der Trennkammerspalt in einem Schnitt senkrecht zur Strömungsrichtung gezeigt ist,
Fig. 3.3 die Bandenverbreiterung am Beispiel einer Trennung eines anionischen und kationischen Analyten mit hoher Diffusionsgeschwindigkeit beim FFE-Trennprozeß in erfindungsgemäßer Durchführung, wobei der Trennkammerspalt in einem Schnitt senkrecht zur Strömungsrichtung gezeigt ist,
Fig. 4.1, 4.2 und 4.3 den Zeitablauf bei einer Ausführungsform des erfindungsgemäßen Verfahrens in der in Fig. 1 gezeigten Vorrichtung, wobei

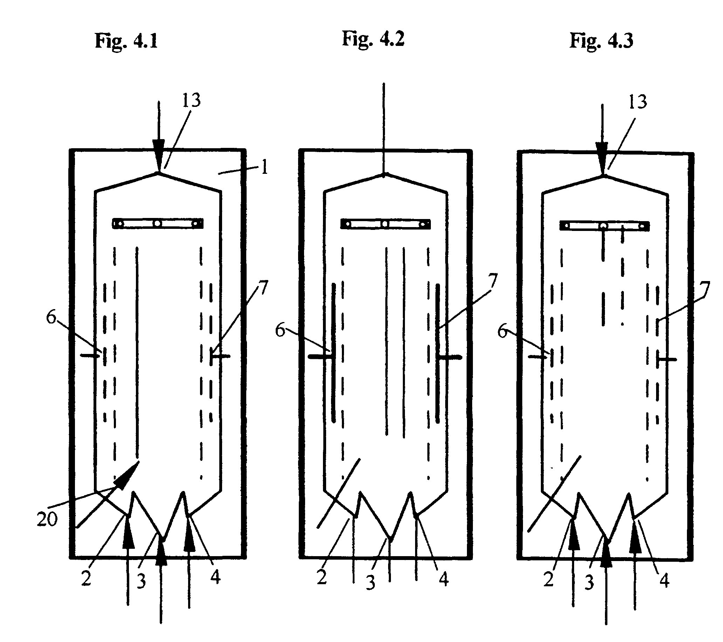

   Fig. 4.1 das Anfangsstadium mit Medien-und Probeneintrag bei elektrischem Feld gleich null,
   Fig. 4.2 das nachfolgende Stadium mit eingeschaltetem elektrischem Feld ohne Transport der Medien und der Probe und
   Fig. 4.3 das nachfolgende Stadium des Medieneintrags und Probenaustrags bei abgeschaltetem elektrischen Feld darstellt, und

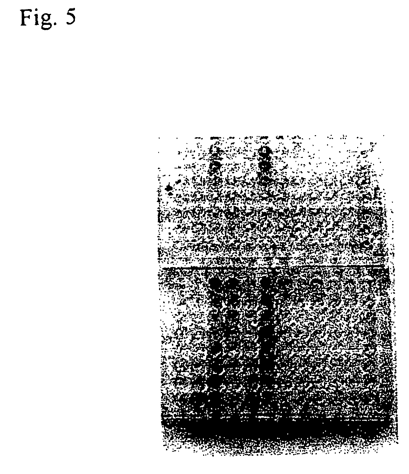

Fig. 5 im Vergleich die Verteilungsmuster der getrennten Analyten beim erfindungsgemäßen Verfahren (oben) und beim kontinuierlichen Verfahren (unten).

Die Fign. 4.1 bis 4.3 zeigen die gleiche Trennkammer 1, die auch in Fig. 1 dargestellt ist, ebenfalls in schematischer Weise. Gleiche Teile wie in Fig. 1 sind mit den gleichen Bezugszeichen wie dort versehen.

In der in Fig. 4.1 dargestellten Anfangsphase werden über die zentrale Einlaßöffnung 3 das Trennmedium und über die beiden äußeren Einlässe 2 und 4 die Stabilisierungsmedien in den Trennraum eingeführt. Gleichzeitig strömt über den Einlaß 13 das Gegenstrommedium ein. Die Probe wird über einen Einlaß 20 eingeführt. Zwischen den Elektroden 6 und 7 liegt keine Spannung an (dies ist durch die gestrichelte Darstellung der Elektroden angedeutet).

Die Probe breitet sich dann im wesentlichen parallel zu den Elektroden (angedeutet durch den vertikalen Strich, der von der Spitze des durch den Einlaß 20 verlaufenden Pfeils ausgeht) aus.

In der in Fig. 4.2 dargestellten nächsten Phase wird an die Elektroden 6 und 7 Spannung angelegt, so daß sich in der Trennkammer ein elektrisches Feld (mit in der Darstellung horizontaler Feldrichtung) ausbildet. Der Transport der Medien und der Probe ist unterbrochen, und es kommt zu einer räumlichen Trennung der Probenbestandteile in in der Zeichnung horizontaler Richtung (angedeutet durch die beiden vertikalen parallelen durchgezogenen Striche in Fig. 4.2).

In der in Fig. 4.3 dargestellten Schlußphase ist das elektrische Feld wieder abgeschaltet und die Medien werden über die Einlässe 2, 3 und 4 und 13 wieder zugeführt, nicht aber die Probe. Auf diese Weise werden die elektrophoretisch räumlich getrennten Probenbestandteile durch die Schlauchöffnungen 11 abgeführt.

Solange gewährleistet ist, daß die in der ersten Phase zwischen die Elektroden 6, 7 eingetragene Probe während der nachfolgenden Phase der elektrophoretischen Trennung mit allen ihren Teilen im elektrischen Feld verbleibt, kann auch statt des Ruhens der Probe während der elektrophoretischen Trennung eine langsame Driftgeschwindigkeit, bei geeigneten Abmessungen der Elektroden auch eine gegenüber dem Eintrag unverminderte Strömungsgeschwindigkeit vorgesehen werden.

Mit dieser erfindungsgemäßen Verfahrensführung im Intervallbetrieb wird eine deutliche Verbesserung der Auflösung im Vergleich zur bekannten kontinuierlichen Verfahrensführung erzielt.

Dies läßt sich deutlich machen, indem ein Gemisch von elektrisch geladenen Farbstoffen einmal mit kontinuierlicher Free Flow Elektrophorese und zum anderen mit diskontinuierlicher Free Flow Zonenelektrophorese gemäß der Erfindung getrennt wird.

Fig. 5 zeigt im Vergleich die Verteilungsmuster der getrennten Analyten in den jeweiligen Sammelgefäßen (Kavitäten der Mikrotiterplatte) bei dem erfindungsgemäßen Verfahren und bei dem bekannten kontinuierlichen Verfahren. Im Falle des erfindungsgemäßen Intervallbetriebs (Ergebnis im Bild oben dargestellt) ist die Trennqualität für alle Analyten gleich gut und weitaus besser als im Vergleichsversuch des kontinuierlichen Verfahrens (Ergebnis im Bild unten dargestellt).

Der Vergleich wurde an derselben Apparatur und unter vergleichbaren elektrophoretischen Bedingungen durchgeführt (identisches Trennmedium, ähnliche elektrophoretische Wanderungsstrecke, ähnliche elektrophoretische Leistung).

Da im Intervallbetrieb eine wesentlich kürzere Trennzeit genügt, um eine Trennqualität zu erreichen, wie diese bei einer kontinuierlichen Prozeßführung möglich wird, ist im Intervallbetrieb auch eine höhere Durchsatzkapazität zu erzielen.

Der Grund für die verbesserte Auflösung im Intervallbetrieb gegenüber dem kontinuierlichen Betrieb ergibt sich aus den Fig. 3.1 bis 3.3, die Schnitte durch die Trennkammer senkrecht zur Strömungsrichtung und parallel zu der Richtung des elektrischen Feldes darstellen.

Die Fig. 3.1 und 3.2 zeigen die Bandenverbreiterung im kontinuierlichen Betrieb für einen anionischen und kationischen Analyten mit hoher Diffusionsgeschwindigkeit bzw. für einen anionischen und kationischen Analyten mit geringer Diffusionsgeschwindigkeit. Die Fig. 3.3 zeigt die Bandenverbreiterung für den anionischen und kationischen Analyten mit hoher Diffusionsgeschwindigkeit bei stehenden Medien.

Im kontinuierlichen Betrieb kommt es zu einer Bandenverbreiterung, die auf den laminaren Strömungsquerschnitt (vgl. Fig. 2.1) zurückgeht, der größere Verweildauern des Analyten im elektrischen Feld und damit eine stärkere seitliche Migration im Bereich der Trennkammerwände zur Folge hat. Dies führt zu einer zusätzlichen sichelförmigen Bandenverbreiterung, die der Bandenverbreiterung durch Diffusion überlagert ist.

Im Intervallbetrieb, im dem das elektrische Feld auf einen stehenden Analyten einwirkt, ist die Bandenverbreiterung allein durch Diffusion bedingt und damit geringer als in den Fällen eines kontinuierlichen Betriebs. Eine geringere Bandenverbreiterung hat eine höhere Auflösung zur Folge. Die Auflösung ist also im Intervallbetrieb besser als im kontinuierlichen Betrieb.

## Patentansprüche

1. Verfahren zur trägerfreien Ablenkungselektrophorese, bei welchem ein Trennmedium als Träger und eine zu untersuchende Probe eine Trennkammer (1) von einem Einlaßende zu einem Auslaßende durchströmen, wobei die Probe durch ein mittels Elektroden (6, 7) erzeugtes Feld räumlich in abzusammelnde Fraktionen getrennt wird, **dadurch gekennzeichnet, daß** der Eintrag der Probe in einen zwischen den Elektroden (6, 7) liegenden Trennraum erfolgt, wenn keine Spannung an den Elektroden (6, 7) anliegt, daß nach Abschluß des Eintrags der Probe in den Trennraum Spannung an die Elektroden (6, 7) gelegt wird, daß die elektrophoretische Trennung bei einer Strömungsgeschwindigkeit von Trennmedium und Probe durchgeführt wird, die gegenüber der Strömungsgeschwindigkeit beim Eintrag der Probe auf ein langsames Driften zwischen den Elektroden (6, 7) vom Einlaß- zum Auslaßende reduziert ist und daß die elektrophoretische Trennung höchstens so lange durchgeführt wird, wie sich noch im wesentlichen die gesamte Probe im Trennraum zwischen den Elektroden (6, 7) befindet.

2. Verfahren zur trägerfreien Ablenkungselektrophorese, bei welchem ein Trennmedium als Träger und eine zu untersuchende Probe eine Trennkammer (1) von einem Einlaßende zu einem Auslaßende durchströmen, wobei die Probe durch ein mittels Elektroden (6, 7) erzeugtes Feld räumlich in abzusammelnde Fraktionen getrennt wird, **dadurch gekennzeichnet, daß** der Eintrag der Probe in einen zwischen den Elektroden (6, 7) liegenden Trennraum erfolgt, wenn keine Spannung an den Elektroden (6, 7) anliegt, daß nach Abschluß des Eintrags der Probe in den Trennraum Spannung an die Elektroden (6, 7) gelegt wird, und daß die elektrophoretische Trennung bei mit dem Trennmedium ruhender Probe durchgeführt wird.

3. Verfahren nach einem der vorstehenden Ansprüche, **dadurch gekennzeichnet, daß** der elektrophoretische Trennprozeß beendet wird, sobald mittels einer externen Detektionsvorrichtung erkannt wird, daß ein Probenbestandteil oder eine Markersubstanz eine bestimmte räumliche Position in der Trennkammer (1) erreicht hat.

4. Verfahren nach einem der vorstehenden Ansprüche, **dadurch gekennzeichnet, daß** die getrennten Probenbestandteile bei abgeschaltetem elektrischen Feld mit hoher Flußrate über eine Fraktioniervorrichtung in getrennte Probenbehälter transportiert werden.

## Claims

1. A method of carrier-free, free-flow electrophoresis, wherein a separating medium, as a carrier, and a sample to be investigated flow through a separating chamber (1) from an inlet end to an outlet end, wherein the sample is spatially separated into fractions to be collected by a field generated by means of two electrodes (6, 7), **characterised in that** the sample is introduced into a separating volume situated between the electrodes (6, 7) when no voltage is applied to the electrodes (6, 7), that after the introduction of the sample into the separating volume is complete a voltage is applied to the electrodes (6, 7), that electrophoretic separation is effected at a velocity of flow of the separating medium and sample which in relation to the velocity of flow when the sample is introduced is reduced to a slow drift between the electrodes (6, 7) from the inlet to the outlet end, and that electrophoretic separation is effected at most for as long as substantially the entire sample is still situated in the separating volume between the electrodes (6, 7).

2. A method of carrier-free, free-flow electrophoresis, wherein a separating medium, as a carrier, and a sample to be investigated flow through a separating chamber (1) from an inlet end to an outlet end, wherein the sample is spatially separated into fractions to be collected by a field generated by means of two electrodes (6, 7) , **characterised in that** the sample is introduced into a separating volume situated between the electrodes (6, 7) when no voltage is applied to the electrodes (6, 7), that after the introduction of the sample into the separating volume is complete a voltage is applied to the electrodes (6, 7), and that electrophoretic separation is effected with the sample at rest with the separating medium.

3. A method according to either one of the preceding claims, **characterised in that** the electrophoretic separation process is terminated as soon as it is identified by means of an external detection apparatus that a sample constituent or a marker substance has reached a defined spatial position in the separating chamber (1).

4. A method according to any one of the preceding claims, **characterised in that** the separated sample constituents are transported, with the electric field switched off and at a high flow rate, via a fractionating apparatus into separate sample containers.

## Revendications

1. Procédé d'électrophorèse par déviation sans support, pour lequel un milieu de séparation comme support et un échantillon à étudier traversent une chambre de séparation (1) d'une extrémité d'entrée à une extrémité de sortie, de sorte que l'échantillon est séparé spatialement en fractions à récupérer par un champ engendré au moyen d'électrodes (6, 7), **caractérisé en ce que** l'introduction de l'échantillon s'effectue dans un espace de séparation entre les électrodes (6, 7), quand il n'y a pas de tension aux électrodes (6, 7), **en ce qu'**après l'achèvement de l'introduction de l'échantillon dans l'espace de séparation, une tension est appliquée aux électrodes (6, 7), **en ce que** la séparation électrophorétique est effectuée à une vitesse d'écoulement du milieu de séparation et de l'échantillon qui, en comparaison de la vitesse d'écoulement lors de l'introduction de l'échantillon, est réduite à une dérive lente entre les électrodes (6, 7) de l'extrémité d'entrée à l'extrémité de sortie et **en ce que** la séparation électrophorétique est effectuée au plus aussi longtemps que l'ensemble de l'échantillon se trouve encore essentiellement dans l'espace de séparation entre les électrodes (6, 7).

2. Procédé d'électrophorèse par déviation sans support, pour lequel un milieu de séparation comme support et un échantillon à étudier traversent une chambre de séparation (1) d'une extrémité d'entrée à une extrémité de sortie, sachant que l'échantillon est séparé spatialement en fractions à récupérer par un champ engendré au moyen d'électrodes (6, 7), **caractérisé en ce que** l'introduction de l'échantillon s'effectue dans un espace de séparation entre les électrodes (6, 7), quand il n'y a pas de tension aux électrodes (6, 7), **en ce qu'**après l'achèvement de l'introduction de l'échantillon dans l'espace de séparation, une tension est appliquée aux électrodes (6, 7), et **en ce que** la séparation électrophorétique est effectuée l'échantillon étant immobile avec le milieu de séparation.

3. Procédé selon l'une des revendications précédentes, **caractérisé en ce que** le processus de séparation électrophorétique est terminé dès qu'il est reconnu au moyen d'un dispositif de détection externe qu'un composant de l'échantillon ou une substance de marquage a atteint une position spatiale déterminée dans la chambre de séparation (1).

4. Procédé selon l'une des revendications précédentes, **caractérisé en ce que**, le champ électrique étant coupé, les composants séparés de l'échantillon sont transportés à grand débit par l'intermédiaire d'un dispositif de fractionnement dans des récipients d'échantillon séparés.
